# DEMANDE DE BREVET EUROPEEN

(11) **EP 4 671 824 A1**
(43) Date de publication de la demande: **31.12.2025**
(21) Numéro de dépôt: 25185599.5
(22) Date de dépôt: 26.06.2025
(51) Int. Cl.: G01S 13/28, G01S 13/30, G01S 13/90

(54) **PROCÉDÉ DE FONCTIONNEMENT D'UN RADAR SUIVANT UN MODE D'IMAGERIE À SYNTHÈSE D OUVERTURE ET UN DEUXIÈME MODE DE FONCTIONNEMENT UTILISANT DES PHASES ALÉATOIRES ET RADAR ASSOCIÉ**

(30) Priorité: 28.06.2024 FR 2407047; 25.10.2024 FR 2411687
(71) Demandeur: THALES, 92190 Meudon (FR)
(72) Inventeur: GOY, Philippe, 33700 MERIGNAC (FR); COTTRON, Rodolphe, 33700 MERIGNAC (FR); KEMKEMIAN, Stéphane, 33700 MERIGNAC (FR)
(74) Mandataire: Lavoix

(57) **Abrégé**

La présente invention concerne un procédé de fonctionnement d'un radar de détection de cibles suivant un premier mode de fonctionnement et au moins un deuxième mode de fonctionnement, le premier mode de fonctionnement étant un mode d'imagerie radar à synthèse d'ouverture et chaque deuxième mode de fonctionnement étant différent du premier mode de fonctionnement,
le procédé comprenant la mise en œuvre de plusieurs récurrences d'une étape d'émission/réception de signaux, chaque récurrence de ladite étape comprenant les sous-étapes suivantes :
- génération d'une séquence d'impulsions consécutives, chaque impulsion de la séquence étant associée à un mode de fonctionnement respectif,
- émission des impulsions dans des bandes fréquentielles différentes, et
- réception dans une fenêtre temporelle commune des échos des impulsions,
lors de la sous-étape de l'émission de chaque récurrence, au moins l'une des impulsions, dite impulsion déphasée, étant émise avec une phase aléatoire associée au nombre N.

## Description

La présente invention concerne un procédé de fonctionnement d'un radar de détection et d'imagerie. La présente invention concerne également un radar de détection et d'imagerie mettant en œuvre un tel procédé.

Le domaine technique de l'invention est celui de la gestion du budget temps de détection, d'imagerie et d'identification par des systèmes radar.

De manière traditionnelle, un système radar peut être employé de manière « mono-tâche », c'est-à-dire un seul mode Doppler ou non-Doppler de fonctionnement tout au long de la mission. Cela est par exemple le cas d'un mode Doppler de surveillance maritime (dite « MMTI », de l'anglais « Maritime Moving Target Indicator ») ou terrestre (dite « GMTI », de l'anglais « Ground Moving Target Indicator ») qui est adapté à une altitude et un type de cible donné.

Ainsi, le mode AIR permet de détecter des aéronefs alors que le mode de surveillance terrestre GMTI permet de détecter des engins se déplaçant sur une surface terrestre et le mode de surveillance maritime MMTI permet de détecter des engins se déplaçant sur une surface maritime.

Cette adaptation inclut par exemple l'emploi d'une logique de balayage de l'espace, de formes d'onde et de traitement fixés. Autrement dit, dans un tel cas, la trame ne varie pas dans le temps, tant que l'opérateur ne change pas de mission ou de mode. Le budget temps est alors associé uniquement à cette tâche et à des tâches techniques d'auto-calibration du radar.

Depuis de nombreuses années, les opérateurs radar cherchent à agrandir le spectre d'emploi des systèmes de détection radar et demandent à ce qu'ils deviennent « multitâches ». Par exemple, pour un même système radar, il est avantageux d'avoir simultanément une situation tactique maritime (MMTI), aérienne (dite « AIR ») et éventuellement avoir un retour des conditions météo. Le système radar doit alors définir le budget temps à allouer à chacune des tâches à mener.

Évidemment, plus une tâche a de temps alloué, plus elle sera efficace par exemple en termes de capacité de détection et/ou de discrimination. La gestion et l'optimisation du budget temps apparaissent donc cruciales pour les nouveaux systèmes radar.

Traditionnellement, le système radar emploie des stratégies d'entrelacement « temps court » (à l'échelle du bloc de traitement) ou « temps long » (à l'échelle d'un scan) pour mener à bien ses différentes tâches. Un budget temps est alloué à chacune de ces tâches à partir d'un compromis de performances de chacune des fonctions prises individuellement (temps de rafraîchissement, portée de détection, etc.)

L'entrelacement de blocs radar est alors une technique qui ordonnance temporellement des tâches qui ne sont pas simultanées.

Pour obtenir des tâches simultanées, une technique connue consiste à décomposer le système antennaire du radar en plusieurs sous-réseaux et d'allouer une tâche à chacun des sous-réseaux pour effectuer ce que l'on appelle une émission colorée. On retrouve ce fonctionnement principalement dans les systèmes radar de type MIMO (de l'anglais « Multiple Input Multiple Output »).

L'émission simultanée de plusieurs formes d'onde orthogonales est ainsi réalisée pour colorer l'espace, c'est-à-dire associer un couple {sous-réseau, forme d'onde} à une direction {azimut-élévation}. L'émission colorée permet soit d'obtenir une vision complète de l'environnement en réduisant ou en améliorant considérablement le temps de rafraichissement d'une tâche, soit d'effectuer plusieurs tâches simultanément.

Cette décomposition de l'espace antennaire en sous-réseaux et l'émission colorée ne sont pas nécessairement disponibles ou souhaitables pour toute architecture radar. En effet, un tel type d'émission peut dégrader les performances d'un système radar, en termes de portée notamment.

La présente invention a pour but de résoudre ce problème et de proposer donc une solution permettant de mettre en œuvre un système radar multitâches tout en utilisant un temps de rafraichissement équivalent à celui d'un système mono-tâche. Cela permet alors d'adapter le système radar à des combinaisons multi-tâches tout en préservant les performances du système.

À cet effet, il est décrit un procédé de fonctionnement d'un radar de détection de cibles suivant un premier mode de fonctionnement et au moins un deuxième mode de fonctionnement, le premier mode de fonctionnement étant un mode d'imagerie radar à synthèse d'ouverture et chaque deuxième mode de fonctionnement étant différent du premier mode de fonctionnement, le procédé comprenant la mise en œuvre de plusieurs récurrences d'une étape d'émission/réception de signaux, chaque N-ième récurrence de ladite étape comprenant les sous-étapes suivantes :
- génération d'une séquence d'impulsions consécutives, chaque impulsion de la séquence étant associée au premier mode de fonctionnement ou audit au moins un deuxième mode de fonctionnement,
- émission des impulsions dans des bandes fréquentielles différentes, et
- réception dans une fenêtre temporelle commune des échos des impulsions, lors de la sous-étape de l'émission de chaque N-ième récurrence, au moins l'une des impulsions, dite impulsion déphasée, étant émise avec une phase aléatoire associée au nombre N.

Suivant d'autres aspects avantageux de l'invention, le procédé comprend une ou plusieurs des caractéristiques suivantes, prises isolément ou suivant toutes les combinaisons techniquement possibles :
- chaque impulsion est émise avec une phase aléatoire associée à la bande fréquentielle correspondante.
- le procédé comprend, en outre, une étape préliminaire de sélection d'un nombre M correspondant à un rang d'ambiguïté à traiter dans un faisceau de signaux émis/reçus par le radar, le nombre M variant entre 0 et un nombre maximal de rangs d'ambiguïté dans le faisceau et dans lequel, lors de la sous-étape de la réception de chaque N-ième récurrence, le déphasage des échos reçus étant compensé pour la bande fréquentielle de l'impulsion déphasée, par la phase aléatoire associée au nombre N-M.
- la sous-étape de la réception comprend la compensation du déphasage des échos reçus dans chaque bande fréquentielle, par la phase aléatoire associée au nombre N-M et à cette bande fréquentielle.
- les impulsions de chaque récurrence partagent un même support fréquentiel et sont émises avec un écart fréquentiel supérieur à chacune desdites bandes fréquentielles, l'écart fréquentiel est choisi pour pouvoir distinguer les bandes fréquentielles différentes à la réception des échos.
- lors de l'étape de génération, une impulsion de la séquence est associée au premier mode de fonctionnement, chaque autre impulsion de la séquence étant associée à un deuxième mode de fonctionnement respectif.
- la séquence présente une fréquence de répétition comprise entre 1 kiloHertz et 5 kiloHertz.
- le premier mode de fonctionnement ou l'audit au moins un deuxième mode de fonctionnement correspondent à une même direction donnée.
- le premier mode de fonctionnement ou l'audit au moins un deuxième mode de fonctionnement correspondent à une direction respective.

Il est également décrit un procédé de fonctionnement de fonctionnement d'un radar suivant un premier mode de fonctionnement et au moins un deuxième mode de fonctionnement, le premier mode de fonctionnement étant un mode d'imagerie radar à synthèse d'ouverture et chaque deuxième mode de fonctionnement étant différent du premier mode de fonctionnement, le procédé comprenant la mise en œuvre de plusieurs récurrences d'une étape d'émission/réception de signaux, chaque N-ième récurrence de ladite étape comprenant les sous-étapes suivantes :
- génération d'une séquence d'impulsions consécutives, chaque impulsion de la séquence étant associée au premier mode de fonctionnement ou audit au moins un deuxième mode de fonctionnement,
- émission des impulsions dans des bandes fréquentielles différentes, les impulsions associées aux premier mode de fonctionnement et audit au moins un deuxième mode de fonctionnement étant émises en utilisant des pentes différentes de chirps utilisés pour les émettre, et
- réception dans une fenêtre temporelle commune des échos des impulsions.

Suivant d'autres aspects avantageux de l'invention, le procédé comprend une ou plusieurs des caractéristiques suivantes, prises isolément ou suivant toutes les combinaisons techniquement possibles :
- lors de la sous-étape de réception, des échos associés au premier mode de fonctionnement ou audit au moins un deuxième mode de fonctionnement sont distingués en déterminant les pentes des chirps correspondants.
- lors de l'étape de génération, une impulsion de la séquence est associée au premier mode de fonctionnement, chaque autre impulsion de la séquence étant associée à un deuxième mode de fonctionnement respectif.
- la séquence présente une fréquence de répétition comprise entre 1 kiloHertz et 5 kiloHertz.
- le deuxième mode de fonctionnement est un mode Doppler.
- le premier mode de fonctionnement ou l'audit au moins un deuxième mode de fonctionnement correspondent à une même direction donnée.
- le premier mode de fonctionnement ou l'audit au moins un deuxième mode de fonctionnement correspondent à une direction respective.

La description décrit aussi un procédé de fonctionnement d'un radar suivant un premier mode de fonctionnement et au moins un deuxième mode de fonctionnement, le premier mode de fonctionnement étant un mode d'imagerie radar à synthèse d'ouverture et chaque deuxième mode de fonctionnement étant différent du premier mode de fonctionnement, le procédé comprenant la mise en œuvre de plusieurs récurrences d'une étape d'émission/réception de signaux, chaque N-ième récurrence de ladite étape comprenant les sous-étapes suivantes :
- génération d'une séquence d'impulsions consécutives, chaque impulsion de la séquence étant associée au premier mode de fonctionnement ou audit au moins un deuxième mode de fonctionnement,
- émission des impulsions dans des bandes fréquentielles différentes, les impulsions associées aux premier mode de fonctionnement et audit au moins un deuxième mode de fonctionnement étant émises en utilisant des polarisations différentes, et
- réception dans une fenêtre temporelle commune des échos des impulsions.

Suivant d'autres aspects avantageux de l'invention, le procédé comprend une ou plusieurs des caractéristiques suivantes, prises isolément ou suivant toutes les combinaisons techniquement possibles :
- une polarisation est émise pour chaque impulsion.
- un ensemble de polarisations formant une signature est émise pour chaque impulsion.
- lors de la sous-étape de réception, des échos associés au premier mode de fonctionnement ou audit au moins un deuxième mode de fonctionnement sont distingués en déterminant leurs polarisations.
- lors de l'étape de génération, une impulsion de la séquence est associée au premier mode de fonctionnement, chaque autre impulsion de la séquence étant associée à un deuxième mode de fonctionnement respectif.
- la séquence présente une fréquence de répétition comprise entre 1 kiloHertz et 5 kiloHertz.
- le deuxième mode de fonctionnement est un mode Doppler.
- le premier mode de fonctionnement ou l'audit au moins un deuxième mode de fonctionnement correspondent à une même direction donnée.
- le premier mode de fonctionnement ou l'audit au moins un deuxième mode de fonctionnement correspondent à une direction respective.

La présente description a également pour objet un radar comprenant des moyens techniques configurés pour mettre en œuvre un des procédés tels que définis ci-dessus.

À cet effet, l'invention a pour objet un procédé de fonctionnement d'un radar de détection de cibles en mode d'analyse de fouillis suivant plusieurs configurations de détection, chaque configuration de détection correspondant à une distance de détection différente et le radar, le procédé comprenant la mise en œuvre de plusieurs récurrences d'une étape d'émission/réception de signaux, chaque N-ième récurrence de ladite étape comprenant les sous-étapes suivantes :
+ génération d'une séquence d'impulsions consécutives, chaque impulsion de la séquence étant associée à une configuration de détection respective;
+ émission des impulsions dans des bandes fréquentielles différentes ;
+ réception dans une fenêtre temporelle commune des échos des impulsions .

Suivant d'autres aspects avantageux de l'invention, le procédé comprend une ou plusieurs des caractéristiques suivantes, prises isolément ou suivant toutes les combinaisons techniquement possibles :
- le procédé comprend, en outre, une étape préliminaire de sélection d'un nombre M correspondant à un rang d'ambiguïté à traiter dans un faisceau de signaux émis/reçus par le radar, le nombre M variant entre 0 et un nombre maximal de rangs d'ambiguïté dans le faisceau ;
   lors de la sous-étape de l'émission de chaque N-ième récurrence, au moins l'une des impulsions, dite impulsion déphasée, étant émise avec une phase aléatoire associée au nombre N ;
   lors de la sous-étape de la réception de chaque N-ième récurrence, le déphasage des échos reçus étant compensé pour la bande fréquentielle de l'impulsion déphasée, par la phase aléatoire associée au nombre N-M.
- chaque impulsion est émise avec une phase aléatoire associée à la bande fréquentielle correspondante.
- la sous-étape de la réception comprend la compensation du déphasage des échos reçus dans chaque bande fréquentielle, par la phase aléatoire associée au nombre N-M et à cette bande fréquentielle.
- les impulsions de chaque récurrence partagent un même support fréquentiel et sont émises avec un écart fréquentiel supérieur à chacune desdites bandes fréquentielles.
- l'écart fréquentiel est choisi pour pouvoir distinguer les bandes fréquentielles différentes à la réception des échos.
- la séquence comporte un nombre supérieur ou égal à 2 impulsions.
- les configurations de détection différentes correspondent à des directions d'émission et de réception différentes.
- les directions d'émission et de réception différentes correspondent à des angles différents, les angles étant choisis parmi des angles de site définis par rapport à une direction de pointage ou des angles d'azimut définis par rapport à une direction de pointage.
- le procédé comporte, après la réception des impulsions de la séquence, une étape de mise en œuvre d'une émission et d'une réception d'une impulsion additionnelle, l'étape de mise en œuvre étant répétée pour que le nombre d'impulsions additionnelles soit égal au nombre d'impulsions de la séquence.
- la direction d'émission de chaque impulsion additionnelle est la même que celle d'une impulsion de la séquence.
- lors de la sous-étape de l'émission, les impulsions associées aux configurations de détection différentes sont émises en utilisant des pentes différentes de chirps utilisés pour les émettre.
- lors de la sous-étape de réception, des échos associés aux configurations de détection différentes sont distingués en déterminant les pentes des chirps correspondants.
- lors de la sous-étape de l'émission, les impulsions associées aux configurations de détection différentes sont émises en utilisant des polarisations différentes.
- une polarisation est émise pour chaque impulsion.
- un ensemble de polarisations formant une signature est émise pour chaque impulsion.
- lors de la sous-étape de réception, des échos associés aux configurations de détection différentes sont distingués en déterminant leurs polarisations

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un radar selon l'invention,
- [Fig. 2] la figure 2 est un organigramme d'un procédé de fonctionnement du radar de la figure 1, et
- [Fig. 3] [Fig. 4] [Fig. 5] [Fig. 6] [Fig. 7] les figures 3 à 7 sont différentes vues illustrant la mise en œuvre du procédé de la figure 2.

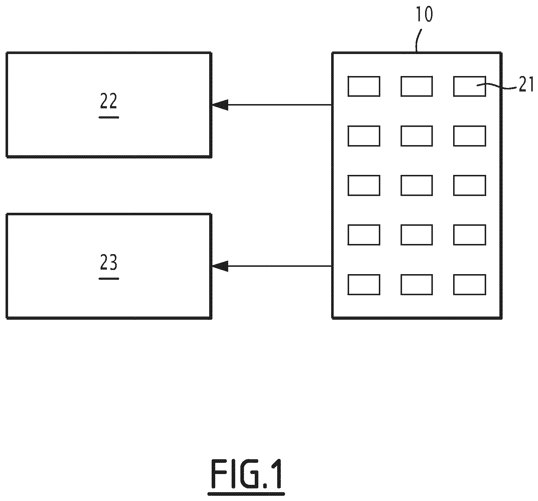

La figure 1 illustre un radar 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter ou caractériser des cibles suivant plusieurs modes de fonctionnement.

Un premier mode de fonctionnement est le mode d'imagerie radar à synthèse d'ouverture.

L'imagerie radar à synthèse d'ouverture est plus souvent désignée sous l'acronyme SAR renvoyant à la dénomination anglaise de « *Synthetic Aperture Radar ».*

L'imagerie SAR est une technique radar permettant d'imager le sol avec une excellente résolution distance (inversement proportionnelle à la bande émise) et une excellente résolution transverse (inversement proportionnelle au temps d'éclairement).

Pour obtenir des images de résolution métrique voire inférieure, les temps d'éclairement nécessaires dépassent la dizaine de secondes en fonction des valeurs de vitesse du porteur radar. En règle générale, le capteur radar est alors totalement dédié à la fonction d'imagerie du sol.

L'opérateur peut commander une ou plusieurs zones à imager de deux manières différentes.

En fonctionnement SPOTLIGHT, l'opérateur sélectionne une ou des zones, par exemple en indiquant les coordonnées (latitude, longitude) des points centraux : l'ordonnanceur radar commande successivement les formes d'onde et les traitements SAR de manière séquentielle pour chaque zone à imager tant que ces zones sont dans le cône de visibilité du radar.

En fonctionnement STRIPMAP, l'opérateur déclare le point central en {distance, azimut) par rapport au radar. Tant que la commande est active, l'ordonnanceur radar commande une succession d'éclairements SAR autour de ce point central, de sorte à avoir des images SAR qui défilent en fonction de la vitesse du porteur.

De manière générale, le capteur radar et les traitements associés sont intégralement dévoués à la production des images SAR.

Les gammes de fréquence de répétition Fr d'un mode SAR sont de l'ordre de 1kHz à 5kHz.

Pour un radar multi-panneaux, lorsque l'architecture d'émission/réception de plusieurs panneaux simultanément est possible, des modes simultanés peuvent être employés : un mode par panneau.

Le radar 10 est également propre à fonctionner selon un ou plusieurs deuxièmes modes.

Chaque deuxième mode de fonctionnement est différent du premier mode de fonctionnement.

Le deuxième mode de fonctionnement présente la même période de récurrence que le premier mode de fonctionnement.

Selon un premier exemple, le deuxième mode de fonctionnement est un mode Doppler.

Par définition, le mode Doppler d'un radar correspond à un mode de fonctionnement de celui-ci dans lequel un traitement de type Doppler est applicable.

Un tel deuxième mode de fonctionnement est, par exemple, choisi parmi la liste constituée de :
- un mode Doppler de poursuite active, et
- un mode Doppler GMTI sans lever d'ambiguïté distance-vitesse

Plus généralement, le deuxième mode de fonctionnement est tout type de mode Doppler pouvant fonctionner à la fréquence de répétition du mode SAR.

Selon un deuxième exemple, le deuxième mode de fonctionnement est un mode non-Doppler.

A titre d'illustration, le deuxième mode de fonctionnement non-Doppler est alors choisi parmi la liste constituée de :
- un mode MTO,
- un mode de détection maritime, et
- un mode de type Look up sans nécessité de rejeter par traitement Doppler le fouillis de sol.

Plus généralement, le deuxième mode de fonctionnement est tout type de mode Doppler pouvant fonctionner à la fréquence de répétition du mode SAR.

Selon un autre mode de fonctionnement, la fréquence de répétition du mode SAR peut varier au sein de la prise d'image afin de rendre possible le fonctionnement d'un mode Doppler, GMTI par exemple, avec lever d'ambiguïté distance-vitesse.

En outre, dans le cas de la présente demande avec une réception commune, chaque mode de fonctionnement est réalisé sur le même panneau antennaire sur le même cône de visibilité de l'antenne.

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

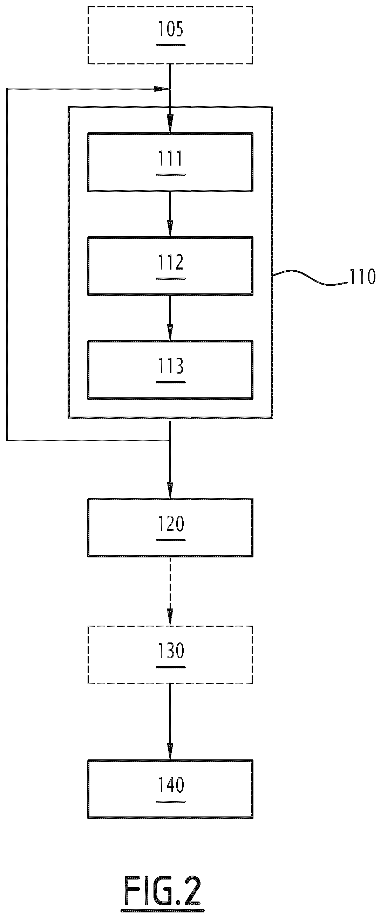

Le procédé de fonctionnement du radar 10 sera désormais expliqué en référence à la figure 2 présentant un organigramme de ses étapes.

Il est considéré que ce procédé est mis en œuvre pour effectuer un scan ou une image des environs du porteur embarquant le radar 10, selon par exemple une direction de déplacement du porteur.

Ce procédé comprend notamment la mise en œuvre de plusieurs récurrences d'une étape 110 d'émission/réception de signaux.

La fréquence de répétition de ces récurrences est choisie en fonction de fréquences de répétition associées au premier mode de fonctionnement (mode SAR).

Chaque N-ième récurrence de l'étape 110 comprend la mise œuvre de sous-étapes 111 à 113 expliquées en détail ci-dessous.

Lors de la sous-étape 111, l'unité d'émission 22 génère une séquence d'au moins deux impulsions consécutives associées à un mode de fonctionnement respectif.

En particulier, lors de cette sous-étape, l'unité d'émission 22 génère une première impulsion I₁ associée au premier mode de fonctionnement et une deuxième impulsion I₂ associée au deuxième mode de fonctionnement.

Chaque impulsion est associée à une direction d'émission et de réception définie par exemple par un couple de valeurs angulaires. Ces valeurs angulaires correspondent par exemple à l'élévation (ou site) et à l'azimut d'émission, dénotées par la suite respectivement par Elᵢ et Azᵢ. L'émission de chaque impulsion est orientée suivant ces valeurs angulaires grâce à une FFC (formation de faisceaux conventionnelle) réalisée à l'émission. Dans tout ce qui suit, l'indice i=1 désigne le premier mode de fonctionnement du radar 10 et i=2 désigne le deuxième mode de fonctionnement du radar 10.

Les impulsions sont générées dans une fenêtre d'émission Te dans laquelle chaque impulsion a une largeur Li et espacée de l'autre impulsion et de l'une des frontières de la fenêtre d'émission Te par un écart temporel T_{GAP}.

Il peut être noté ici que sans pertes de généralités, les largeurs d'impulsion peuvent être de largeur différente.

Avantageusement, dans la suite, il est supposé que Li1 = Li2, ceci correspondant à une mise en œuvre plus aisée.

Dans le domaine fréquentiel, les impulsions partagent un même support fréquentiel de réception B_{rec}, avec un écart fréquentiel F_{GAP} entre les porteuses Fi correspondantes supérieur aux bandes fréquentielles Bi de ces impulsions. L'écart fréquentiel F_{GAP} est choisi suffisant pour distinguer les échos de ces impulsions à la réception. Dans tout ce qui suit, une bande fréquentielle est définie par une fréquence centrale et une largeur de bande.

Sans pertes de généralités, les bandes fréquentielles peuvent être de largeur différente entre les deux modes.

Avantageusement, dans la suite, toutes les bandes fréquentielles présentent une même largeur.

La bande fréquentielle B₁ de la première impulsion I₁, c'est-à-dire de l'impulsion associée à la première configuration de détection, est choisie la même pour chaque récurrence.

Avantageusement, ce choix est indépendant de l'application du radar 10.

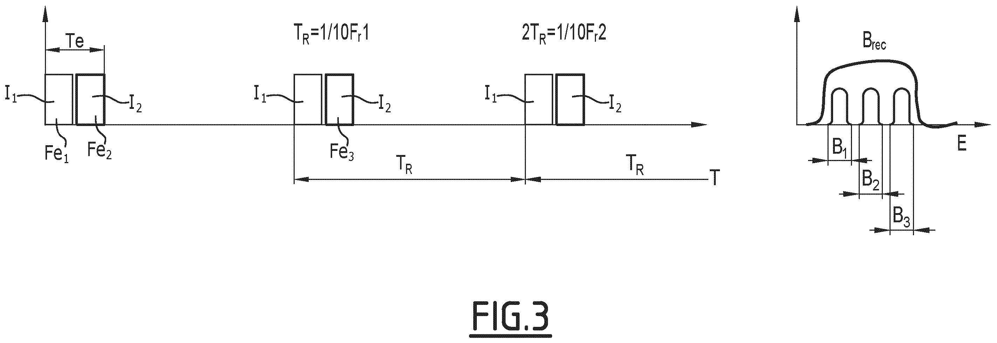

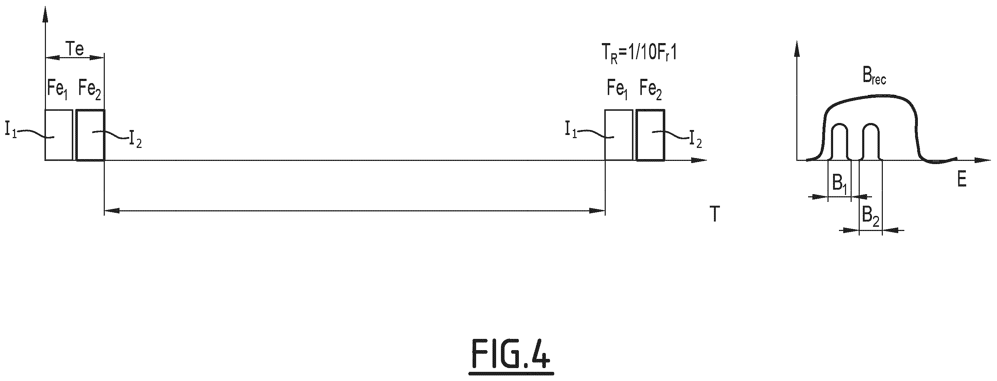

Cela est illustré schématiquement sur les figures 3 et 4 illustrant plusieurs récurrences consécutives correspondant à deux applications distinctes du radar 10. Ainsi, la même fréquence centrale Fe, est choisie pour la première impulsion dans chaque récurrence dans chaque application pour pouvoir réaliser un traitement cohérent sur le train d'impulsions associée à l'impulsion I1, la fréquence Fe₁ et la direction (Az₁,El₁).

La bande fréquentielle de la deuxième impulsion I₂, c'est-à-dire de l'impulsion associée à la deuxième configuration de détection, est choisie en fonction de l'application du radar 10.

En particulier, pour une première variante de fonctionnement, une même bande fréquentielle et plus particulièrement une même fréquence centrale pour la deuxième impulsion I₂ est choisie dans chaque k-ième récurrence. Cette technique peut être vue comme un mécanisme de barillet, où à chaque instant T_{R}, on choisit une fréquence centrale dans le barillet modulo k. Autrement dit, dans un tel cas, k fréquences centrales différentes sont choisies de manière alternée pour les deuxièmes impulsions I₂ dans k récurrences consécutives.

Dans l'exemple de la figure 3, lorsque k=2, deux bandes fréquentielles B₂ et B₃ (c'est-à-dire deux fréquences centrales) sont alors choisies de manière alternée pour chaque deuxième impulsion I₂.

Pour une deuxième variante, une même bande fréquentielle B₂ pour la deuxième impulsion I₂ est choisie dans chaque récurrence, comme cela est illustré sur la figure 4.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée de cette fenêtre commune de réception est égale à la durée totale de la récurrence T_{R} moins la durée de la fenêtre d'émission Te.

Lors de la réception, les échos correspondant aux impulsions différentes sont distingués par ses bandes fréquentielles différentes, en utilisant par exemple des filtres passe-bande.

Un filtrage spatial en réception de type FFC est appliqué dans la direction des impulsions émises pour séparer les échos issus des différentes impulsions émises. Cette FFC en réception peut être réalisée de manière identique ou différente de celle réalisée en émission (pondération différente notamment).

Lors d'une étape suivante 120, mise en œuvre après les N récurrences de l'étape 110, l'unité de réception 23 met en œuvre un traitement cohérent des échos correspondant aux impulsions associées à la première configuration de détection et aux impulsions associées à la deuxième configuration de détection. Un tel traitement cohérent consiste à appliquer le filtrage adapté à la forme d'onde de la configuration souhaitée, par exemple une compression d'impulsion sur l'axe temps court (au sein d'une récurrence) et un traitement Doppler combinant les signaux de chaque récurrence partageant la même fréquence d'émission.

Lors d'une étape suivante 130, mise en œuvre uniquement pour lorsque le radar 10 fonctionne selon sa première variante, l'unité de réception 23 met en œuvre en outre un traitement non-cohérent aux sorties du traitement cohérent des impulsions associées au deuxième mode de fonctionnement. Un tel traitement non-cohérent effectue la moyenne en puissance des signaux reçus sur chaque bande de fréquence d'une même direction (après le traitement cohérent).

A titre de remarque, il peut être noté ici que, pour un traitement non-Doppler, seul le traitement non-cohérent est mis en œuvre.

Dans certains modes de réalisation, cette étape est mise en œuvre systématiquement (i.e. indépendamment de l'application du radar) dans la mesure où k = 1 la moyenne est directement le signal.

Lors d'une étape suivante 140, l'unité de réception 23 transmet l'ensemble des sorties du traitement cohérent et éventuellement du traitement non-cohérent, à tout système intéressé permettant par exemple de mettre en œuvre une étape de détection, une levée d'ambiguïté en distance et/ou en vitesse.

Ces sorties peuvent alors être utilisées pour détecter une ou plusieurs cibles selon les modes de fonctionnement différents, éventuellement avec des vitesses et des distances associées à ces cibles.

Dans certains modes de réalisation, le procédé de fonctionnement tel qu'expliqué précédemment comprend en outre la mise en œuvre d'au moins une technique supplémentaire permettant de séparer les échos des deux modes, voire de rejeter certains échos qui ne sont pas nécessaires ou sont ambigus en distance, pour reconstituer une image complète, nécessaire et suffisante des environs du radar selon au moins l'un des modes de fonctionnement précités.

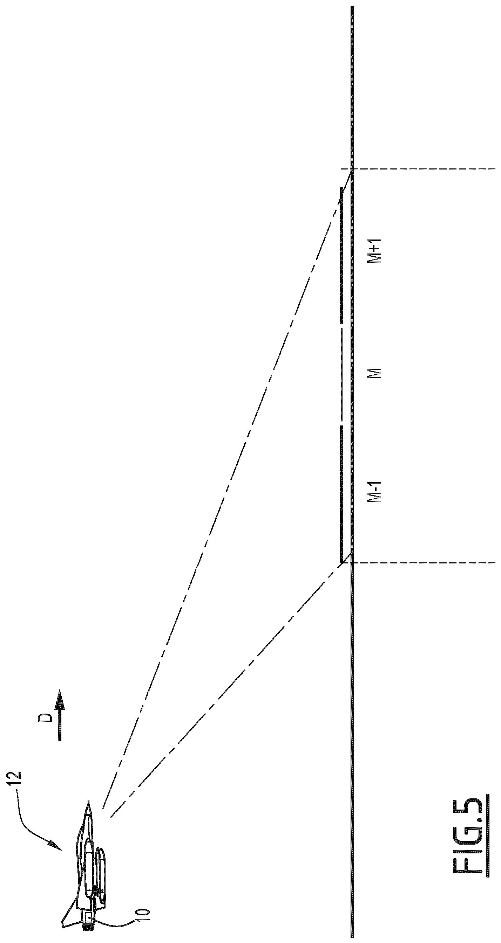

La figure 5 illustre un exemple d'un tel cas permettant de traiter un unique rang d'ambiguité distance selon le mode radar SAR. Selon cet exemple, le faisceau radar émis par le radar 10 à partir du porteur 12 couvre sur la surface terrestre plusieurs portions dont les échos se superposent par ambiguïté distance liée au choix de la fréquence de répétition Fr du mode. Pour éviter de traiter l'ensemble des échos provenant de l'empreinte du faisceau au sol, une première technique consistant à choisir seulement un rang d'ambiguïté au sein du faisceau mis en œuvre, cette zone distance constituant toute la zone d'intérêt du mode (SAR ou GMTI)

Selon cette première technique de séparation, le procédé de fonctionnement du radar 10 comprend en outre une étape préliminaire 105 consistant à sélectionner un nombre M correspondant à un rang d'ambiguïté à traiter dans le faisceau de signaux émis/reçus par le radar. Ce nombre M varie alors entre 0 et un nombre maximal de rangs d'ambiguïté dans le faisceau. Le nombre maximal dépend notamment de l'ouverture du faisceau radar. Comme cela est illustré sur la figure 5, le rang d'ambiguïté M peut correspondre à la partie centrale du faisceau radar.

Dans certains modes de réalisation, lors de cette étape, plusieurs nombres M correspondant à plusieurs rangs d'ambiguïté à traiter sont choisis, i.e. lorsque la zone d'intérêt du mode est étalée sur plusieurs rangs d'ambiguïté distance. Dans ce cas, il est considéré par la suite que la technique décrite ci-dessous est appliquée en relation avec chaque nombre M choisi. Les traitements s'effectuent par exemple en parallèle.

Lors de la mise en œuvre de la N-ième récurrence de l'étape 110 et notamment lors de la sous-étape de l'émission 112, l'unité d'émission 22 choisit l'une des impulsions associée à un des modes radar, par exemple la première impulsion et ajoute une phase aléatoire *ϕ_{iN}* à cette impulsion. Avantageusement, l'unité d'émission 22 ajoute une phase aléatoire différente *ϕ_{iN}* à chacune des impulsions. Chaque impulsion ayant une phase aléatoire *ϕ_{iN}* ajoutée est dite par la suite impulsion déphasée.

Il est à noter que le choix de l'impulsion à déphaser peut rester le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Il est également à noter que la valeur de la phase aléatoire *ϕ_{iN}* pour la ou chaque impulsion est ensuite mémorisée pour toutes les récurrences, soit N+M récurrences suivantes de l'étape 110.

Puis, lors de la sous-étape de réception 113, l'unité de réception 23 compense le déphasage des échos reçus dans la bande fréquentielle de la ou de chaque impulsion déphasée, par la phase aléatoire associée au nombre N-M. Autrement dit, le déphasage s'effectue en faisant une soustraction de la valeur *ϕ_{iN-M}* dans la bande correspondant à l'indice i.

Ainsi, lors du traitement qui suit, seulement les échos correspondant au rang d'ambiguïté M peuvent être traités de manière cohérente. Le déphasage des autres échos ne peut pas se faire correctement de sorte qu'ils vont se comporter comme des bruits blancs.

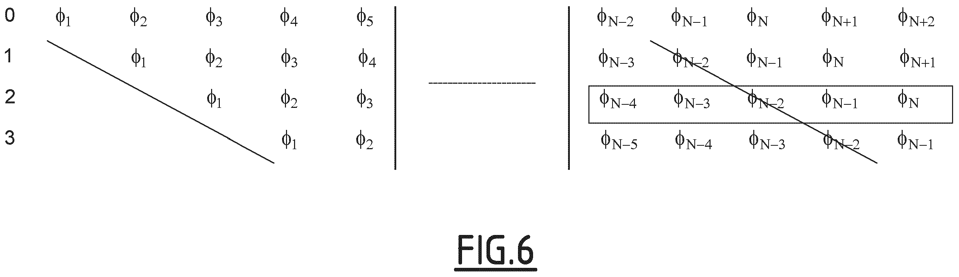

Ce principe est illustré schématiquement sur la figure 6. Selon l'exemple de cette figure, le nombre M est égal à 2 et le nombre maximal de rangs d'ambiguïté est égal à 3. Ainsi, lors de la N-ième récurrence de l'étape 110, pour choisir uniquement les signaux correspondant au rang d'ambiguïté M=2, la valeur *ϕ*_{*iN*-2} est utilisée pour compenser le déphasage de la récurrence N dans la bande fréquentielle correspondante.

Autrement formulé, cette compensation de phase aléatoire puis le traitement cohérent sur les N+M récurrences constituent le filtrage adapté à l'impulsion déphasée.

D'autres techniques pour lever les ambiguïtés en distance et vitesse et/ou selon au moins une direction de pointage sont également possibles, par exemple en employant plusieurs fréquences de répétition associées à un traitement d'extraction.

Par ailleurs, il est également possible d'obtenir une meilleure isolation des échos correspondant aux modes radar différents lors de leur réception.

Ainsi, selon une deuxième technique de séparation, lors de la mise en œuvre de la N-ième récurrence de l'étape 110 et notamment lors de la sous-étape de l'émission 112, l'unité d'émission 22 met en œuvre des pentes différentes des chirps utilisés pour émettre les impulsions associées aux configurations de détection différentes.

Autrement dit, lors de cette sous-étape 112, l'unité d'émission 22 émet les impulsions en utilisant soit une pente ascendante soit une pente descendante en fonction de la configuration associée à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées à la première configuration et une pente descendante est choisie pour les impulsions associées à la deuxième configuration.

Puis, lors de la sous-étape de réception 113, l'unité de réception 23 reçoit des échos ayant des pentes fréquentielles différentes. Cette unité de réception 23 détermine donc les pentes reçues afin d'isoler les échos correspondant aux configurations de détection différentes.

Pour cela, l'unité de réception 23 emploie les filtres (compression d'impulsions) adaptés aux pentes de chirps correspondantes.

Selon une troisième technique de séparation permettant d'obtenir également une meilleure isolation des échos correspondant aux modes radar différents lors de leur réception, lors de la mise en œuvre de la N-ième récurrence de l'étape 110 et notamment lors de la sous-étape de l'émission 112, l'unité d'émission 22 met en œuvre des polarisations différentes des ondes utilisées pour émettre les impulsions associées aux modes radars différents.

Autrement dit, lors de cette sous-étape 112, l'unité d'émission 22 émet l'onde portant chaque impulsion avec une polarisation choisie en fonction du mode radar associé à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112.

Selon d'autres exemples, une polarisation à 45° ou en circulaire peut être utilisée. Par exemple, une polarisation circulaire gauche peut être associée à la première configuration et une polarisation circulaire droite peut être associée à la deuxième configuration.

Puis, lors de la sous-étape de réception 113, l'unité de réception 23 reçoit des échos ayant des polarisations différentes. Cette unité de réception 23 détermine donc les pentes reçues afin d'isoler les échos correspondant aux configurations différentes.

Pour cela, l'unité de réception 23 emploie les filtres adaptés aux pentes de polarisation correspondantes.

Le principe qui vient d'être décrit peut être raffiné en utilisant plusieurs polarisations dans la même impulsion.

Dans un tel cas, chaque impulsion comporte une signature de polarisation spécifique. Une telle signature correspond à un code de polarisation.

Cette technique permet ainsi de colorer les différentes impulsions dans l'espace et d'obtenir une réjection supplémentaire de 20 à 30 dB.

Dans certains modes de réalisation, les techniques précitées sont combinées entre elles pour être mises en œuvre simultanément. En outre, une technique pour lever les ambiguïtés en distance et vitesse et/ou selon au moins une direction de pointage, peut être également utilisée en combinaison avec la deuxième technique ou la troisième technique, telle que décrite ci-dessus.

On conçoit alors que la présente invention présente un certain nombre d'avantages.

Le procédé consiste à profiter du temps d'émission / réception d'un premier mode de fonctionnement d'imagerie SAR pour effectuer une (ou plusieurs) autres tâches du radar (deuxième mode de fonctionnement) sur le même panneau antennaire.

L'ordonnanceur radar peut tester pour chacune des pistes actives ou non dans le cône de visibilité commun à l'image SAR les pistes actives compatibles pour la détection de la Fr du mode SAR : les pistes sont dites compatibles lorsqu'elles tombent dans une zone « claire » de la forme d'onde SAR, c'est-à-dire hors éclipse distance, en zone bruit thermique et hors éclipse de fouillis de sol (par exemple, -+/-10m/s modulo la vitesse ambiguë = λFr/2).

L'ordonnanceur joue alors périodiquement des pointages de poursuite active en même temps que le SAR à l'échelle de l'impulsion.

Le fait d'employer une seule Tr interdit de faire de la lever d'ambiguïté, ce qui n'est pas un problème en poursuite active car l'on connait déjà la vitesse et la distance non-ambiguës des pistes.

En variante, il est envisageable de faire bénéficier à l'utilisateur d'une possibilité de réglage automatique sur la Fr également sur le mode SAR pour pouvoir effectuer une lever d'ambiguïté pour le mode Doppler associé (GMTI, inutile en poursuite active).

Cela suppose néanmoins de conserver la cohérence de phase pour le SAR, donc rester à Fe constante.

Selon un exemple, pour respecter cette contrainte, le signal alimentant le SAR peut être ré-échantillonné pour se ramener à une situation où la Fr est constante. Le fenêtrage d'acquisition en SAR étant dynamique et la gamme de distance à imager étant prédéfinies, il peut être choisi une valeur de Li et Fr permettant de prendre en compte le phénomène de l'éclipse survenant avec la distance.

Dans chacun des modes de réalisation précédemment décrits, le procédé permet donc bien de bénéficier des mêmes informations avec un gain de rapidité.

Selon des modes de réalisation avantageux, il est possible de réduire la marge prise sur le rapport fouillis à bruit de construction de l'image SAR en découpant le temps d'émission en P sous-impulsions : une des sous-impulsions est associée au mode d'imagerie SAR et les autres sous-impulsions sont associées à un (ou plusieurs) deuxième(s) mode(s), qui peuvent, selon un cas particulier, correspondre à une autre image SAR prise sur une autre région.

Il est également possible de mettre en œuvre une technique de pas fréquentiel.

La technique de pas fréquentiel est plus souvent désignée sous l'appellation anglaise correspondante de « *step-frequency ».*

Cette technique de pas fréquentiel est une technique classique en SAR qui permet de recombiner des bandes émises pour avoir une résolution distance équivalente à une bande synthétique très grande. Un exemple de mise en œuvre est connu de la demande FR 2766578 B.

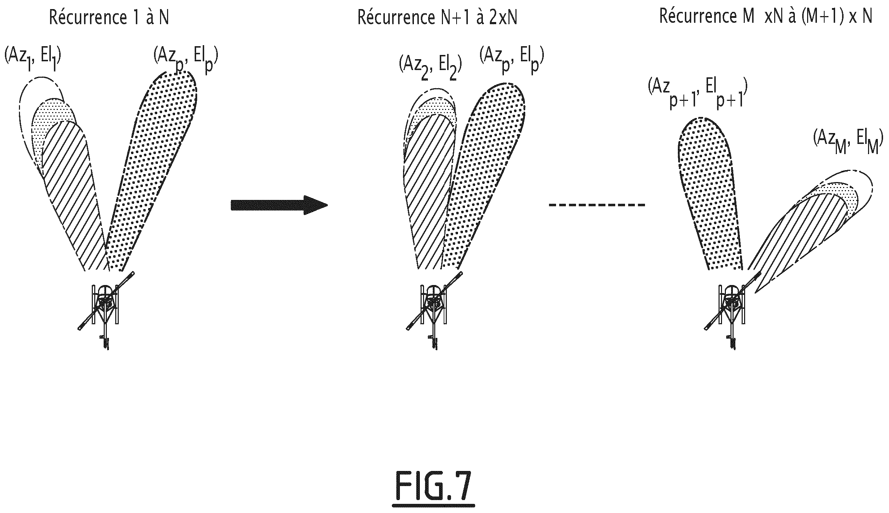

Il peut être également mis en avant en référence à la figure 7 un fonctionnement du radar 10 dans lequel le premier mode de fonctionnement ou ledit au moins un deuxième mode de fonctionnement correspond à une direction respective.

Dans ce cas, la période Tr de récurrence est commune sur les formes d'onde, mais les directions pointées sont décorrélées.

## Revendications

1. Procédé de fonctionnement d'un radar (10) de détection de cibles suivant un premier mode de fonctionnement et au moins un deuxième mode de fonctionnement, le premier mode de fonctionnement étant un mode d'imagerie radar à synthèse d'ouverture et chaque deuxième mode de fonctionnement étant différent du premier mode de fonctionnement, le procédé comprenant la mise en œuvre de plusieurs récurrences d'une étape (110) d'émission/réception de signaux, chaque N-ième récurrence de ladite étape (110) comprenant les sous-étapes suivantes :
- génération d'une séquence d'impulsions consécutives, chaque impulsion de la séquence étant associée au premier mode de fonctionnement ou audit au moins un deuxième mode de fonctionnement,
- émission des impulsions dans des bandes fréquentielles différentes, et
- réception dans une fenêtre temporelle commune des échos des impulsions,
lors de la sous-étape de l'émission de chaque N-ième récurrence, au moins l'une des impulsions, dite impulsion déphasée, étant émise avec une phase aléatoire associée au nombre N.

2. Procédé selon la revendication 1, dans lequel chaque impulsion est émise avec une phase aléatoire associée à la bande fréquentielle correspondante.

3. Procédé selon la revendication 2, dans lequel le procédé comprend, en outre, une étape préliminaire de sélection d'un nombre M correspondant à un rang d'ambiguïté à traiter dans un faisceau de signaux émis/reçus par le radar (10), le nombre M variant entre 0 et un nombre maximal de rangs d'ambiguïté dans le faisceau et dans lequel, lors de la sous-étape de la réception de chaque N-ième récurrence, le déphasage des échos reçus étant compensé pour la bande fréquentielle de l'impulsion déphasée, par la phase aléatoire associée au nombre N-M.

4. Procédé selon la revendication 3, dans lequel la sous-étape de la réception (113) comprend la compensation du déphasage des échos reçus dans chaque bande fréquentielle, par la phase aléatoire associée au nombre N-M et à cette bande fréquentielle.

5. Procédé selon l'une quelconque des revendications 1 à 4, dans lequel les impulsions de chaque récurrence partagent un même support fréquentiel et sont émises avec un écart fréquentiel supérieur à chacune desdites bandes fréquentielles, l'écart fréquentiel est choisi pour pouvoir distinguer les bandes fréquentielles différentes à la réception des échos.

6. Procédé selon l'une quelconque des revendications 1 à 4, dans lequel lors de l'étape de génération, une impulsion de la séquence est associée au premier mode de fonctionnement, chaque autre impulsion de la séquence étant associée à un deuxième mode de fonctionnement respectif.

7. Procédé selon l'une quelconque des revendications 1 à 6, dans lequel la séquence présente une fréquence de répétition comprise entre 1 kiloHertz et 5 kiloHertz.

8. Procédé selon l'une quelconque des revendications 1 à 7, dans lequel le premier mode de fonctionnement ou l'audit au moins un deuxième mode de fonctionnement correspondent à une même direction donnée.

9. Procédé selon l'une quelconque des revendications 1 à 8, dans lequel le premier mode de fonctionnement ou l'audit au moins un deuxième mode de fonctionnement correspondent à une direction respective.

10. Radar (10) comprenant des moyens techniques (21, 22, 23) configurés pour mettre en œuvre le procédé selon l'une quelconque des revendications 1 à 9.
